# EUROPÄISCHE PATENTANMELDUNG

(11) **EP 4 524 432 A1**
(43) Veröffentlichungstag der Anmeldung: **19.03.2025**
(21) Anmeldenummer: 23197215.9
(22) Anmeldetag: 13.09.2023
(51) Int. Cl.: F16H 57/08

(54) **HOHLRADBANDAGE FÜR PLANETENGETRIEBE**

(71) Anmelder: Flender GmbH, 46395 Bocholt (DE)
(72) Erfinder: KLEINE-BROCKHOFF, Ralf, 46395 Bocholt (DE); STRAUCH, Gerrit-Konstantin, 46395 Bocholt (DE); ALOFS, Lukas, 46395 Bocholt (DE)
(74) Vertreter: Michalski Hüttermann & Partner Patentanwälte mbB

(57) **Zusammenfassung**

Planetengetriebe 10 für eine über einen Rotor 106 angetriebene Windkraftanlage 100, mit zumindest einer in einem Getriebegehäuse 12 um eine Drehachse A_{D} umlaufenden ersten Planetenstufe 14, wobei ein Hohlrad 20 der Planetenstufe 14 durch eine strukturell mit dem Getriebegehäuse 12 verbundenen Hohlradbandage gebildet ist, Die Hohlradbandage 20 weist zum Anschluss des Planetengetriebes 10 an eine im Drehmomentfluss vorgeschaltete Hauptlagereinheit 108 ausgehend von einer Stirnfläche 28 der Hohlradbandage 20 jeweils eine Mehrzahl umfänglich und in mindestens zwei radial beabstandeten Umfängen 32₁, 32₂ angeordnete Axialbohrungen 34 auf. Durch die vergrößerte nutzbare Flanschfläche und mehrreihige Verschraubung und/oder Verstiftung lassen sich auch ohne die sonst üblichen reibwerterhöhenden Maßnahmen höhere Drehmomente übertragen. Auf einen Zwischenflansch kann verzichtet werden.

## Beschreibung

Die Erfindung betrifft ein Planetengetriebe für eine über einen Rotor angetriebene Windkraftanlage, mit zumindest einer in einem Getriebegehäuse um eine Drehachse A_{D} umlaufenden ersten Planetenstufe, wobei ein Hohlrad der Planetenstufe durch eine strukturell mit dem Getriebegehäuse verbundenen Hohlradbandage gebildet ist, wobei über die Hohlradbandage zumindest mittelbar das Planetengetriebes an eine im Drehmomentfluss vorgeschaltete Hauptlagereinheit angeschlossen wird.

In Windkraftanlagen kommen Antriebsstränge zum Einsatz, bei denen das zu übertragende Drehmoment zwischen Hauptlagergehäuse und Getriebegehäuse durch die nutzbare Flanschfläche zwischen diesen beiden Gehäusen limitiert ist, wobei der Flanschbereich des Getriebegehäuses durch die ohnehin hoch belastete Hohlradbandage mit der Innenverzahnung gebildet wird. Die aktuell eingesetzten Antriebsstrangkonzepte stoßen beim übertragbaren Drehmoment angesichts der Forderung nach einer höhere Leistungsdichte an Grenzen. Maßnahmen zur Kompensation, wie beispielsweise reibwerterhöhende Beschichtungen der Oberflächen, sind zunehmend ausgereizt. Ein Problem sind insbesondere dynamische, pulsierende Bewegungen, die über die Schnittstelle bzw. die Flanschverbindung von dem Planetengetriebe in die Hauptlagereinheit übertragen werden und dort zu einem Ringwandem der äußeren Lagerschalen der Hauptlager führen können. Ein zwischen Hauptlagereinheit und Getriebegehäuse einsitzender Zwischenflansch wird aktuell genutzt, um den fliegend gelagerten Planetenträger der ersten Planetenstufe zu Montage- und Transportzwecken zu zentrieren. Dies gilt insbesondere bei getrennt transportierten bzw. gelieferter Hauptlagereinheit und Getriebeeinheit. Unter einem fliegend gelagerten Planetenträger wird dessen mittelbare Lagerung über die Lager der Hauptlagereinheit verstanden. Der Planetenträger verfügt hierbei nicht über eine eigene Lagerung gegenüber dem Getriebegehäuse.

Über den Zwischenflansch werden das Hohlrad bzw. die Hohlradbandage der ersten Planetenstufe und die Hauptlagereinheit voneinander entkoppelt. Dieses zusätzliche Bauteil erhöht die Kosten und das Gewicht des gesamten Antriebstrangs und benötigt zudem zwei Flanschverbindungen zur Erfüllung der Funktion. Als Nachteile ergeben sich hierdurch potenzielle Leckagemöglichkeiten durch Mikrobewegungen und das Risiko der Oberflächenzerrüttung in Form von Passungsrost. Die Übertragung von hohen Drehmomenten ist durch die nutzbare Flanschfläche limitiert und entsprechende Grenzen werden bereits erreicht. Es besteht ein ständiges Bedürfnis den Verbindungsbereich zwischen Hauptlagereinheit und Getriebe im Hinblick auf die Drehmomentübertragbarkeit zu verbessern.

Es ist die Aufgabe der Erfindung Maßnahmen aufzuzeigen, die Drehmomentübertragbarkeit im Verbindungsbereich zwischen Hauptlagereinheit und Getriebe verbessern.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Planetengetriebe für eine über einen Rotor angetriebene Windkraftanlage, mit zumindest einer in einem Getriebegehäuse um eine Drehachse A_{D} umlaufenden ersten Planetenstufe, wobei ein Hohlrad der Planetenstufe durch eine strukturell mit dem Getriebegehäuse verbundenen Hohlradbandage gebildet ist, wobei die Hohlradbandage zum Anschluss des Planetengetriebes an eine im Drehmomentfluss vorgeschaltete Hauptlagereinheit ausgehend von einer Stirnfläche jeweils eine Mehrzahl umfänglich und in mindestens zwei radial beabstandeten Umfängen angeordnete Axialbohrungen aufweist.

Die Hohlradbandage kann strukturell als ein Gehäuseteil bezeichnet werden. Die Hohlradbandage kann materialtechnisch als eher weiches Bauteil ausgeführt sein, da es infolge des großen Außendurchmessers und des ebenfalls großen Innendurchmessers schlank ausgeführt ist.

Die in zwei Umfängen angeordneten Axialbohrungen können auch jeweils als Bohrungsreihen bezeichnet werden, die auf unterschiedlichen Radien angeordnet sind. Die Bohrungsreihen sind zweckmäßigerweise konzentrisch zueinander angeordnet. Die Begrifflichkeit innere Bohrungsreihe und äußere Bohrungsreihe ist zweckmäßig. Die Bohrungsreihen können eine gleiche oder auch eine unterschiedliche Anzahl an Axialbohrungen aufweisen. Bevorzugt sind die Axialbohrungen zumindest teilweise als Durchgangsbohrungen ausgeführt. Auch kann bevorzugt vorgesehen sein, dass die Axialbohrungen zumindest teilweise als Gewindebohrungen ausgeführt sind.

Die Stirnfläche der Hohlradbandage kann auch als Flanschfläche bezeichnet werden, da über diese ein Anschluss an die Gegenfläche des Gehäuse der Hauptlagereinheit erfolgen kann.

Die Hohlradbandage weist eine radiale Wanddicke auf, die über die zwei radial beabstandeten Bohrungsreihen weitestgehend zur kraft- und reibschlüssigen Drehmomentübertragung zwischen Hauptlagereinheit und Getriebegehäuse genutzt werden kann. Durch die vergrößerte Kreisringfläche lässt sich die Anzahl drehmomentübertragender Stifte und/oder Schraubbolzen erhöhen und damit die notwendige reibschlüssige Übertragungsfähigkeit verbessern. Hierdurch werden Mikrobewegungen in der Schnittstelle bzw. den Flanschflächen vermindert. Infolgedessen wird die Bildung von Passungsrost reduziert, so dass sich damit der Partikeleintrag in Getriebe und Hauptlagereinheit reduziert.

Durch die vergrößerte nutzbare Flanschfläche und mehrreihige Verschraubung und/oder Verstiftung lassen sich auch ohne die sonst üblichen reibwerterhöhenden Maßnahmen höhere Drehmomente übertragen. Zudem erhöhen sich die radialen und die tangentialen Widerstandmomente an der Kontaktfläche. Durch die reduzierten Mikrobewegungen erfährt auch ein eingesetzter Dichtring weniger Bewegung und es erhöht sich seine Lebensdauer. Durch den Entfall eines üblicherweise zwischen Hauptlagereinheit und Getriebegehäuse eingesetzten Zwischenflansches ergibt sich eine Kostenreduzierung.

Auch werden durch den Wegfall eines Zwischenflansches die negativen Auswirkungen infolge Reibwertverschlechterungen beseitigt, die sich bei wiederholter Demontage und Montage der Hauptlagereinheit und des Getriebes ergeben. Von Vorteil ist auch, dass die herkömmlichen Wärmebehandlungsverfahren beibehalten werden können, da von den konstruktiven Änderungen infolge des Entfalls eines Zwischenflansches nicht beeinflusst werden. Weiterhin ergibt sich durch den Entfall eines Zwischenflansches eine Reduzierung der Toleranzkette und eine Verbesserung des Planlaufs von Hauptlagereinheit zu dem Getriebe. Schließlich ergibt sich eine Erleichterung bei Montierbarkeit, sowohl bei Erstmontage als auch bei Einzelanlieferung der Teile, da infolge eine geringere Formabweichung durch Eigengewichtsreduktion gegeben ist.

In einer bevorzugten Ausgestaltung ist vorgesehen, dass die Axialbohrungen auf dem ersten Umfang und die Axialbohrungen auf dem radial beabstandeten zweiten Umfang in Umfangsrichtung versetzt zueinander angeordnet sind. Zweckmäßig ist dann beispielsweise, dass eine Axialbohrung der einen Bohrungsreihe radial versetzt zwischen zwei Axialbohrungen der anderen Bohrungsreihe angeordnet ist.

In einer zudem bevorzugten Ausgestaltung ist vorgesehen, dass eine auf einem Innenumfang der Hohlradbandage angeordnete Laufverzahnung in Richtung der Stirnfläche in einen Verzahnungsauslauf mündet. Die axiale Breite der Laufverzahnung bleibt im Wesentlichen gleich wie bei herkömmlichen Hohlradbandagen, die zusätzlich mit einem Zwischenflansch montiert werden. Über den Verzahnungsauslauf ist sichergestellt, dass sich die axiale Breite der Laufverzahnung nicht über die gesamte axiale Breite der Hohlradbandage erstreckt. Es bleibt folglich gewisse axiale Breite der Hohlradbandage unberührt von der Kontur der Laufverzahnung, so dass die Hohlradbandage zwischen der Stirnfläche und dem Verzahnungsauslauf die volle radiale Wandstärke aufweist. Der Verzahnungsauslauf endet bevorzugt in einem axialen Abstand zu der Stirnfläche. Der Verzahnungsauslauf wird fertigungstechnisch gefräst oder gedreht, um die resultierende Schleifzeit nicht zu verlängern.

Eine weiterhin bevorzugte Ausgestaltung sieht vor, dass in einem Übergang von der Laufverzahnung zu dem Verzahnungsauslauf eine umfängliche Freidrehung bis zu dem Zahnfuß der Laufverzahnung vorgesehen ist. Über die umfänglich Freidrehung wird erreicht, dass es im Übergang von der Laufverzahnung zu dem Verzahnungsauslauf zu keinem Steifigkeitssprung kommt.

In einer im Übrigen bevorzugten Ausgestaltung ist vorgesehen, dass in einem Axialbereich der Hohlradbandage zwischen der Freidrehung und der Stirnfläche mehrere umfänglich angeordnete Radialbohrungen vorgesehen sind. In einer ersten konkreten Ausgestaltung kann vorgesehen sein, dass zumindest drei gleichmäßig beabstandete Radialbohrungen vorgesehen sind, wobei diese jeweils in einem Umfangsbereich auf vorzugsweise 8 Uhr, 12 Uhr und 16 Uhr angeordnet sind. Durch diese Radialbohrungen können beispielsweise Schraubelemente eingebracht werden, die nach radial innen auf den Planetenträger der ersten Planetenstufe gerichtet und den Planetenträger für eine Montage- oder eine Transportsituation zentrieren. Es wird eine ortsnahe Zentrierung bzw. Fixierung des fliegend gelagerten Planetenträgers der ersten Planetenstufe im Hohlrad (nicht verzahnter Bereich) ermöglicht und zwar ohne Einsatz eines Zwischenflansches. In einer ergänzenden oder alternativen Ausgestaltung sind zwei Radialbohrungen vorgesehen, die jeweils in einem Umfangsbereich auf 9 Uhr und 15 Uhr angeordnet sind. Auch in diesen Radialbohrungen können Schraub- oder Spannelemente vorgesehen sein, die sowohl in der Hohlradbandage als auch in dem Planetenträger der ersten Planetenstufe verschraubt sind, um den Planetenträger als Zugstange zu benutzen und bei einer Handhabung des Getriebes die durch das Eigengewicht verursachten Deformation zu kompensieren. Alternativ kann auch außenumfänglich auf der Hohlradbandage in einem Umfangsbereich auf 9 Uhr und 15 Uhr jeweils eine Schlüsselfläche angeordnet sein, um an den Schlüsselflächen ein zangenartiges Werkzeug ansetzen zu können, dass die durch das Eigengewicht verursachte Deformation hierüber kompensiert.

Die Aufgabe wird auch gelöst durch einen Antriebsstrang für eine Windkraftanlage zur drehmomentübertragenden Verbindung eines Rotors mit einem Generator, umfassend eine Hauptlagereinheit, eine in der Hauptlagereinheit gelagerte Hauptwelle, ein über die Hauptwelle angetriebenes Getriebe und einen mit dem Getriebe antriebsverbundenen Generator, wobei das Getriebe wie beschrieben ausgebildet ist. Hierbei ist ein Planetenträger der Planetenstufe mittelbar über die Hauptwelle gegenüber der Hauptlagereinheit gelagert und gegenüber dem Getriebegehäuse zentriert.

Die Aufgabe wird zudem gelöst durch eine Windkraftanlage, umfassend einen Rotorflansch mit einem Rotor und einen Generator, wobei ein an einem Maschinenträger gehaltener und den Rotorflansch mit dem Generator verbindender Antriebsstrang vorgesehen ist, wobei der Antriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine nicht maßstabsgetreue Darstellung einer Windkraftanlage,
Fig. 2: einen Ausschnitt eines Zusammenbaus eines Planetengetriebes und einer Hauptlagereinheit mit einem fliegend gelagerten Planetenträger,
Fig. 3: eine perspektivische Ansicht einer Hohlradbandage für ein Planetengetriebe nach Fig.2 und
Fig. 4, 5: weitere Ansichten einer Hohlradbandage.

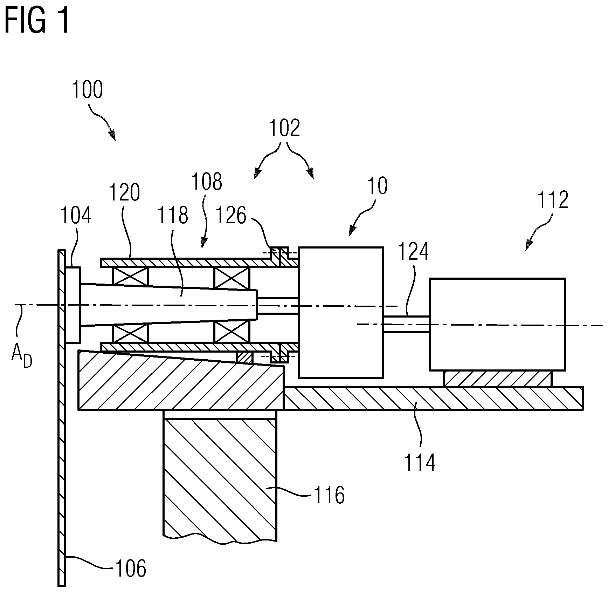

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Getriebe 10 und einen Generator 112 umfasst. Über einen Maschinenträger 114 werden zumindest die Hauptlagereinheit 108 und der Generator 112 über einen Turm 116 gegenüber einem nicht dargestellten Boden abgestützt. Die Hauptlagereinheit 108 umfasst eine Hauptwelle 118, die über eine angestellte Kegelrollenlagerung gegenüber einem Lagergehäuse 120 der Hauptlagereinheit 108 drehbar um eine Drehachse A_{D} gelagert ist. An einem Ende der Hauptwelle 118 ist der Rotorflansch 104 und an diesem der Rotor 106 gehalten. Das andere Ende der Hauptwelle 118 ist vorliegend starr mit dem Getriebe 10 antriebsmäßig verbunden, um ein von dem Rotor 106 aufgebrachtes Antriebsmoment in das Getriebe 10 einzuleiten. Das Getriebe 10 ist als Planetengetriebe mit einer oder mehreren Planetenstufen ausgeführt. Das Getriebe 10 ist über eine Generatorwelle 124 antriebsmäßig mit dem Generator 112 verbunden. Über einen Flansch 126 ist das Lagergehäuse 120 mit dem Getriebe 10 verbunden. Ein Reaktionsmoment des Getriebes 10 ist über den Flansch 126 gegenüber dem Maschinenträger 114 abgestützt.

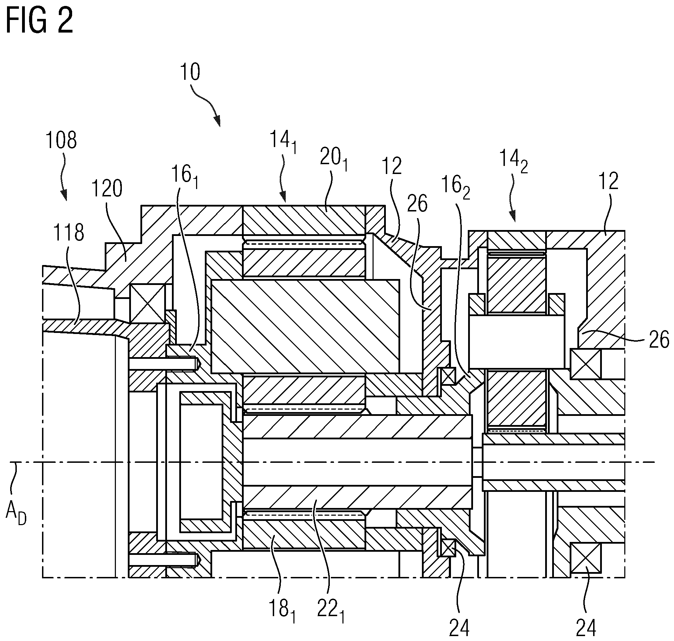

Die Figur 2 zeigt einen Ausschnitt eines Zusammenbaus eines als Planetengetriebe ausgeführten Getriebes 10 und der Hauptlagereinheit 108, wie er beispielsweise in einer in Figur 1 dargestellten Windkraftanlage 100 verbaut sein kann. Gezeigt sind zwei hintereinander angeordnete Planetenstufen 14₁ und 14₂, die um eine Drehachse A_{D} umlaufend in einem Getriebegehäuse 12 angeordnet sind. Es kann auch eine dritte, aber nicht dargestellte Planetenstufe vorgesehen sein. Die Planetenstufen 14₁ und 14₂ sind abgesehen von ihrer Dimensionierung entsprechend aufgebaut und weisen jeweils einen Planetenträger 16₁, 16₂, ein Hohlrad 20₁, 20₂, ein Sonnenrad 22₁, 22₂ und mehrere mit dem jeweiligen Planetenträger 16₁, 16₂ umlaufend und wechselseitig mit dem Hohlrad 20₁, 20₂ und dem Sonnenrad 22₁, 22₂ Verzahnungseingriff stehende Planetenräder 18₁, 18₂ auf. Der Planetenträger 16₂ der zweiten Planetenstufe 14₂ ist über Lager 24 an gehäuseseitigen Abstützflanschen 26 beidseitig oder einseitig gelagert. Über die Lager 24 ist der zweite Planetenträger weitestgehend zentrisch in dem Getriebegehäuse 12 des Planetengetriebes 10 gehalten. Die Sonne 22₁ der ersten Planetenstufe 14₁ ist drehfest und biegesteif mit dem Planetenträger 16₂ der zweiten Planetenstufe 14₂ verbunden. Der Planetenträger 16₁ der ersten Planetenstufe 14₁ ist nicht eigens in dem Gehäuse 12 gelagert, sondern wird nach Montage über eine drehfeste Verbindung mit der Hauptwelle 118 mittelbar über die Hauptlagereinheit 108 gelagert. Die Anbindung des als Hohlradbandage ausgeführtes Hohlrades 20₁ der ersten Planetenstufe 14₁ an das Lagergehäuse 120 der Hauptlagereinheit 108 ist in der Figur 2 lediglich prinzipiell dargestellt und anhand der weiteren Figuren wird insbesondere eine mögliche Ausgestaltung der Hohlradbandage 20₁ erläutert, bei deren Verwendung auf einen separaten Zwischenflansch zwischen Lagergehäuse 120 und Getriebegehäuse 12 verzichtet werden kann.

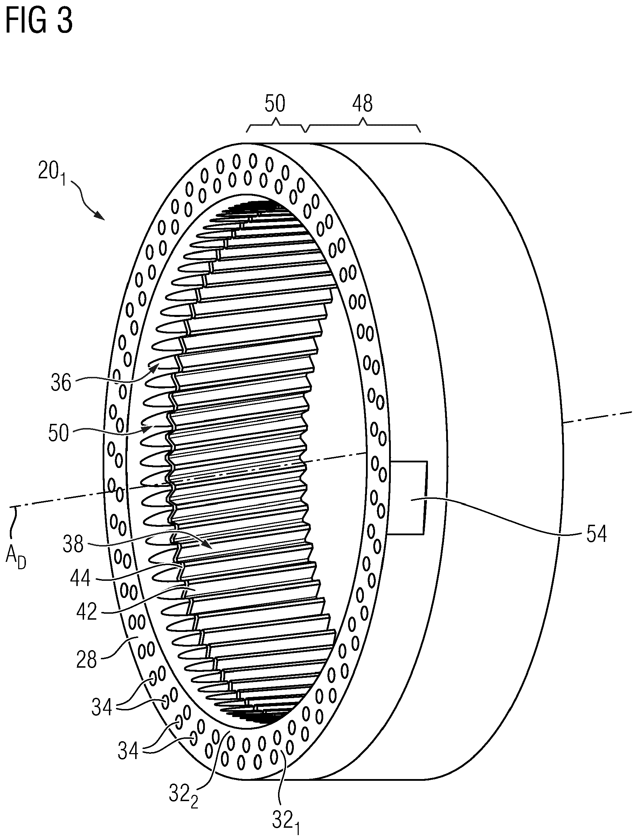

Das als Hohlradbandage ausgeführte Hohlrad 20₁ der ersten Planetenstufe 14₁ kann, wie in der Figur 3 dargestellt, ausgeführt sein. Die vorliegend beschriebene Hohlradbandage 20 weist eine axiale Breite auf, die größer ist als die axiale Breite einer herkömmlichen Hohlradbandage, die zusammen mit einem Zwischenflansch an das Lagergehäuse 120 der Hauptlagereinheit 108 montiert wird. Die vorliegend beschriebene Hohlradbandage 20 lässt sich in ihrer axialen Breite unterteilen in einen ersten Axialabschnitt 48 und einen zweiten Axialabschnitt 50. Die ringförmige Hohlradbandage 20 weist eine Innenumfangsfläche 36 auf und auf dieser innerhalb des ersten Axialabschnitts 48 eine Laufverzahnung 38, die in bekannter Weise in einem Verzahnungseingriff mit den Planetenrädern 18 der jeweiligen Planetenstufe 14 steht. Innerhalb des zweiten Axialabschnitts 50 ist auf der Innenumfangsfläche 36 ein Verzahnungsauslauf 40 der Laufverzahnung 38 und ein im wesentlichen unprofilierter Umfangsbereich gebildet. Der Verzahnungsauslauf 40 endet folglich in einem axialen Abstand zu einer Stirnfläche 28 der Hohlradbandage 20. Zudem ist innenumfänglich eine Freidrehung 42 zwischen der Laufverzahnung 38 und dem Verzahnungsauslauf 40 vorgesehen. Die Freidrehung 42 verläuft bis zu einem Zahnfuß 44 der Laufverzahnung 44 und bildet den Übergang zwischen dem ersten und dem zweiten Axialabschnitt 48, 50.

Ausgehend von der Stirnfläche 28 bildet die Hohlradbandage 20 jeweils eine Mehrzahl umfänglich und in zwei radial beabstandeten Umfängen 32₁, 32₂ angeordnete Axialbohrungen 34 aus. Die Axialbohrungen 34 sind in Richtung der Drehachse A_{D} gerichtet bzw. parallel zu dieser. Über die Axialbohrungen 34 kann das Planetengetriebe 20, in dem die Hohlradbandage 20 verbaut ist, an eine im Drehmomentfluss vorgeschaltete Hauptlagereinheit 108 angeschlossen werden. Die Umfänge 32₁, 32₂, auf denen jeweils die Axialbohrungen 34 liegen, können auch als Bohrungsreihen bezeichnet werden.

Die Stirnfläche 28 zum Anschluss der Hauptlagereinheit 108 befindet sich auf dem der Laufverzahnung 38 abgewandten axialen Ende der Hohlradbandage 20. Die nicht näher bezeichnete zweite Stirnfläche an dem axialen Ende der Laufverzahnung dient dem Anschluss der Hohlradbandage 20 an das restliche Getriebegehäuse 12, was vorliegend aber keiner näheren Erläuterung bedarf.

Die Axialbohrungen 34 können im Einzelnen unterschiedlich ausgeführt sein. So können die Axialbohrungen 34 teilweise als Durchgangsbohrungen oder auch teilweise als Sacklochbohrungen ausgeführt sei. Die Axialbohrungen 34 auf dem ersten Umfang 32₁ und die Axialbohrungen 34 auf dem radial beabstandeten zweiten Umfang 322 sind zweckmäßigerweise in Umfangsrichtung versetzt zueinander angeordnet.

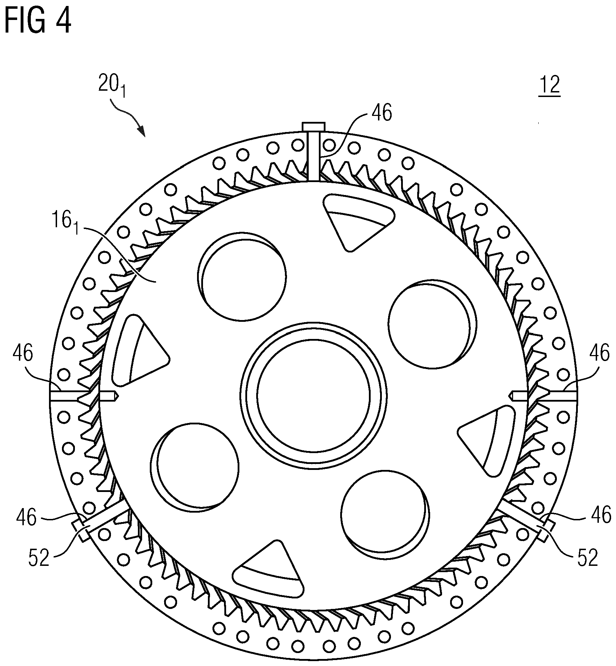

Die Figur 4 zeigt einen Axialschnitt der Hohlradbandage 20 und des Planetenträgers 16, der in der Hohlradbandage 20 umlaufend einsitzt. In dem Axialbereich 50 der Hohlradbandage 20 sind zwischen der Freidrehung 42 und der Stirnfläche 28, welche vorliegend vor der Schnittebene liegt und nicht gezeigt ist, mehrere umfänglich angeordnete Radialbohrungen 46 vorgesehen. Es sind vorliegend zunächst drei Radialbohrungen 46 vorgesehen, die in einem Umfangsbereich auf 8 Uhr, 12 Uhr und 16 Uhr angeordnet sind. Durch diese Radialbohrungen 46 können beispielsweise Schraubelemente 52 eingebracht werden, die nach radial innen auf den Planetenträger 16₁ der ersten Planetenstufe 14₁ gerichtet und den Planetenträger 16₁ für eine Montage- oder eine Transportsituation zentrieren. Weitere zwei Radialbohrungen 46 sind in einem Umfangsbereich auf 9 Uhr und 15 Uhr angeordnet. Auch in diesen Radialbohrungen 46 können Schraubelemente - nicht dargestellt - vorgesehen sein, die sowohl in der Hohlradbandage 20 als auch in dem Planetenträger 16 der ersten Planetenstufe 14 verschraubt sind, um den Planetenträger 16 als Zugstange zu benutzen und bei einer Handhabung des Getriebes die durch das Eigengewicht verursachten Deformation zu kompensieren.

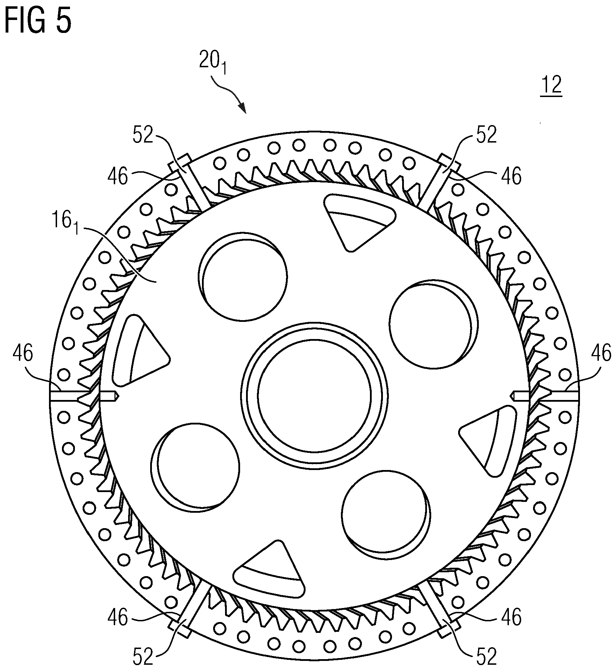

Die Figur 5 zeigt eine Variation der Anordnung und Anzahl der Schraubelemente 52. Es sind vier Schraubelemente vorgesehen und diese einerseits in dem unter Umfang und andererseits in dem oberen Umfang symmetrisch zu einer vertikalen Mittelachse angeordnet.

Außerdem können, wie in Figur 3 dargestellt, außenumfänglich auf der Hohlradbandage 20 in einem Umfangsbereich auf 9 Uhr und 15 Uhr jeweils eine Schlüsselfläche 54 angeordnet sein. Hierüber kann ein zangenartiges Werkzeug angesetzt werden, über das die durch das Eigengewicht verursachte Deformation kompensiert werden kann.

### Bezugszeichenliste

- 10: Planetengetriebe
- 12: Getriebegehäuse
- 14: Planetenstufe
- 16: Planetenträger
- 18: Planetenräder
- 20: Hohlrad
- 22: Sonnenrad
- 24: Lager
- 26: Abstützflansch
- 28: Stirnfläche
- 32: Umfang
- 34: Axialbohrungen
- 36: Innenumfang
- 38: Laufverzahnung
- 40: Verzahnungsauslauf
- 42: Freidrehung
- 44: Zahnfuß
- 46: Radialbohrung
- 48: Axial ab schnitt
- 50: Axial ab schnitt
- 52: Schraubelement
- 54: Schlüsselfläche
- 100: Windkraftanlage
- 102: Antriebstrang
- 104: Rotorflansch
- 106: Mehrblattrotor
- 108: Hauptlagereinheit
- 112: Generator
- 114: Maschinenträger
- 116: Turm
- 118: Hauptwelle
- 120: Lagergehäuse
- 124: Generatorwelle
- 126: Flansch

## Patentansprüche

1. Planetengetriebe (10) für eine über einen Rotor (106) angetriebene Windkraftanlage (100), mit
zumindest einer in einem Getriebegehäuse (12) um eine Drehachse A_{D} umlaufenden ersten Planetenstufe (14), wobei ein Hohlrad (20) der Planetenstufe (14) durch eine strukturell mit dem Getriebegehäuse (12) verbundenen Hohlradbandage gebildet ist, wobei
die Hohlradbandage (20) zum Anschluss des Planetengetriebes (10) an eine im Drehmomentfluss vorgeschaltete Hauptlagereinheit (108) ausgehend von einer Stirnfläche (28) der Hohlradbandage (20) jeweils eine Mehrzahl umfänglich und in mindestens zwei radial beabstandeten Umfängen (32₁, 32₂) angeordnete Axialbohrungen (34) aufweist.

2. Planetengetriebe (10) nach Anspruch 1, **dadurch gekennzeichnet, dass** die Axialbohrungen (34) zumindest teilweise als Durchgangsbohrungen ausgeführt sind.

3. Planetengetriebe (10) nach Anspruch 1 oder 2, **dadurch gekennzeichnet, dass** die Axialbohrungen (34) zumindest teilweise als Gewindebohrungen ausgeführt sind.

4. Planetengetriebe (10) nach einem der Ansprüche 1 bis 3, **dadurch gekennzeichnet, dass** die Axialbohrungen (34) auf dem ersten Umfang (32₁) und die Axialbohrungen (34) auf dem radial beabstandeten zweiten Umfang (32₂) in Umfangsrichtung versetzt zueinander angeordnet sind.

5. Planetengetriebe (10) nach einem der Ansprüche 1 bis 4, **dadurch gekennzeichnet, dass** eine auf einem Innenumfang (36) der Hohlradbandage (20) angeordnete Laufverzahnung (38) in Richtung der Stirnfläche (28) in einen Verzahnungsauslauf (40) mündet.

6. Planetengetriebe (10) nach Anspruch 5, **dadurch gekennzeichnet, dass** in einem Übergang von der Laufverzahnung (38) zu dem Verzahnungsauslauf (40) eine umfängliche Freidrehung (42) bis zu dem Zahnfuß (44) der Laufverzahnung (38) vorgesehen ist.

7. Planetengetriebe (10) nach Anspruch 5 und einem der Ansprüche 1 bis 4 oder 6,
**dadurch gekennzeichnet, dass** der Verzahnungsauslauf (40) in einem axialen Abstand zu der Stirnfläche (28) endet.

8. Planetengetriebe (10) nach Anspruch 6 und einem der Ansprüche 1 bis 5 oder 7,
**dadurch gekennzeichnet, dass** in einem Axialbereich der Hohlradbandage (20) zwischen der Freidrehung (42) und der Stirnfläche (28) mehrere umfänglich angeordnete Radialbohrungen (46) vorgesehen sind.

9. Planetengetriebe (10) nach Anspruch 8, **dadurch gekennzeichnet, dass** zumindest drei vorzugsweise gleichmäßig beabstandete Radialbohrungen (46) vorgesehen sind, wobei diese jeweils in einem Umfangsbereich auf vorzugsweise 8 Uhr, 12 Uhr und 16 Uhr angeordnet sind.

10. Planetengetriebe (10) nach Anspruch 8 oder 9, **dadurch gekennzeichnet, dass** zwei Radialbohrungen (46) vorgesehen sind, die jeweils in einem Umfangsbereich auf 9 Uhr und 15 Uhr angeordnet sind.

11. Planetengetriebe (10) nach Anspruch 6 und einem der Ansprüche 1 bis 5 oder 7 bis 10, **dadurch gekennzeichnet, dass** außenumfänglich auf der Hohlradbandage (20) in einem Umfangsbereich auf 9 Uhr und 15 Uhr jeweils eine Schlüsselfläche (54) angeordnet ist.

12. Antriebsstrang (102) für eine Windkraftanlage (100) zur drehmomentübertragenden Verbindung eines Rotors (106) mit einem Generator (112), umfassend eine Hauptlagereinheit (108), eine in der Hauptlagereinheit (108) gelagerte Hauptwelle (118), ein über die Hauptwelle (118) angetriebenes Getriebe (10) und einen mit dem Getriebe (2) antriebsverbundenen Generator (112), **dadurch gekennzeichnet, dass** das Getriebe (2) nach einem der Ansprüche 1 bis 11 ausgebildet ist.

13. Antriebsstrang nach Anspruch 12, **dadurch gekennzeichnet, dass** ein Planetenträger (16₁) der Planetenstufe (14₁) mittelbar über die Hauptwelle (118) gegenüber der Hauptlagereinheit (108) gelagert und gegenüber dem Getriebegehäuse (12) zentriert ist.

14. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach einem der Ansprüche 12 oder 13 ausgebildet ist.
